# EUROPÄISCHE PATENTANMELDUNG

(11) **EP 4 109 711 A1**
(43) Veröffentlichungstag der Anmeldung: **28.12.2022**
(21) Anmeldenummer: 22189798.6
(22) Anmeldetag: 22.01.2013
(51) Int. Cl.: H02J 7/00, H02J 9/06, B60L 3/00, B60L 53/14, B60L 53/53, B60L 53/60

(54) **LADESTATION ZUM BEREITSTELLEN ELEKTRISCHER ENERGIE FÜR FAHRZEUGE UND VERFAHREN ZUM BETRIEB EINER LADESTATION**

(30) Priorität: 26.01.2012 DE 102012001396
(62) Teilanmeldung aus: 13152162.7
(71) Anmelder: Compleo Charging Solutions AG, 44309 Dortmund (DE)
(72) Erfinder: Kachouh, Checrallah, 44227 Dortmund (DE)
(74) Vertreter: Wickord, Wiro

(57) **Zusammenfassung**

Ladestation zum Bereitstellen elektrischer Energie für elektrisch betreibbare Fahrzeuge mit einem Gehäuse, mit einem dem Gehäuse zugeordneten Steckelement, an welches ein Gegensteckelement ansetzbar ist zur elektrisch leitenden Verbindung von Fahrzeug und Ladestation, mit einer Steuereinheit zur Koordination und Durchführung eines Ladevorgangs und mit einer Ladelastleitung, welche das Steckelement mit einer die externe Energieversorgung bereitstellenden, externen elektrischen Versorgungsleitung verbindet, dadurch gekennzeichnet, dass die Steuereinheit mittels einer ebenfalls mit der externen elektrischen Versorgungsleitung verbundenen Steuerlastleitung mit elektrischer Energie versorgt ist, wobei der Steuerlastleistung ein elektrischer Energiespeicher zugeordnet ist, der derart dimensioniert ist und der derart mit der Steuereinheit zusammenwirkt, dass von der Steuereinheit bei einer Unterbrechung der externen Energieversorgung vorgegebene Notfallroutinen unter Nutzung der in dem Energiespeicher bereitgestellten elektrischen Energie durchführbar sind.

## Beschreibung

Die Erfindung betrifft eine Ladestation zum Bereitstellen elektrischer Energie für elektrisch betreibbare Fahrzeuge mit einem Gehäuse, mit einem dem Gehäuse zugeordneten Steckelement, an welches ein Gegensteckelement ansetzbar ist zur elektrisch leitenden Verbindung von Fahrzeug und Ladestation, mit einer Steuereinheit zur Koordination und Durchführung eines Ladevorgangs und mit einer Ladelastleitung, welche das Steckelement mit einer die externe Energieversorgung bereitstellenden, externen elektrischen Versorgungsleitung verbindet.

Ferner betrifft die Erfindung ein Verfahren zum Betrieb einer Ladestation zur Bereitstellung elektrischer Energie für elektrisch betreibbare Fahrzeuge.

Ladestationen zur Bereitstellung elektrischer Energie für elektrisch betreibbare Fahrzeuge, insbesondere Automobile, finden zunehmend Verbreitung und werden an öffentlich zugänglichen Orten, beispielsweise Parkplätzen, ebenso bereitgehalten wie im privaten Bereich, etwa in der heimischen Garage. Zum Aufladen einer Batterie des elektrisch betreibbaren Fahrzeugs wird das Fahrzeug über ein Ladekabel an die Ladestation angeschlossen. Die Ladestation ihrerseits weist ein Steckelement auf, welches über eine Ladelastleitung mit einer externen elektrischen Versorgungsleitung, insbesondere einer Erdleitung, verbunden ist. An das Steckelement der Ladestation wird ein Gegensteckelement angesetzt. Beispielsweise ist das Gegensteckelement Teil eines Ladekabels, über das die Ladestation mit dem zu ladenden Fahrzeug verbunden wird. Zur Durchführung des Ladevorgangs ist eine Steuereinheit vorgesehen, welche ebenfalls an die externe elektrische Energieversorgung angebunden ist. Im Falle einer Unterbrechung der externen elektrischen Energieversorgung wird zum einen der Ladevorgang unterbrochen. Zum anderen kann die Steuereinheit nicht mehr betrieben werden mit der Folge, dass die Ladestation in einem mitunter undefinierten Betriebszustand gelangt. Insbesondere kann der Ausfall der Ladestation einem Betreiber derselben von der Ladestation selbst nicht zeitnah mitgeteilt werden. Eine Wartung bzw. Instandsetzung der Ladestation verzögert sich somit, bis der Ausfall dem Betreiber gemeldet wird oder anderweitig erkannt wird. Die Verfügbarkeit der Ladestation ist insofern mitunter erheblich eingeschränkt. Da überdies eine Benachrichtigung des Kunden über den Ausfall der Ladestation nicht erfolgt, wird der Kunde bei seiner Rückkehr von dem Ausfall überrascht. Beispielsweise stellt er morgens fest, dass der Speicher des Fahrzeugs für den Weg zum Arbeitsplatz nicht ausreichend geladen ist.

Aus der WO 2011/045925 A1 ist eine Gebäudeinstallation bekannt mit einem Notenergiespeicher, der Energie zum Betrieb von Notfallroutinen bei einem Abfall der primären Energieversorgung bereitstellt. Die Gebäudeinstallation sieht zudem die Möglichkeit vor, den Energiespeicher eines elektrisch betreibbaren Fahrzeugs zu laden, welches über ein Ladekabel mit der Gebäudeinstallation verbunden ist.

Aus der US 2010/0013434 A1 ist eine Ladestation mit einem Steckelement bekannt, welches zur Aufnahme eines Gegensteckelements eines Ladekabels ausgebildet ist. Sofern das Ladekabel mit dem Gegensteckelement in das Steckelement der Ladestation eingesetzt ist, kann eine Verschlussklappe der Ladestation über das Steckelement und das Gegensteckelement geschwenkt und in einer Schließposition verriegelt werden. Das Gegensteckelement kann nicht aus dem Steckelement entnommen werden, falls die Klappe verriegelt ist.

Aufgabe der vorliegenden Erfindung ist es, eine Ladestation und ein Verfahren zum Betrieb derselben derart weiterzubilden, dass im Falle einer Unterbrechung der externen Energieversorgung ein undefinierter Ausfall der Ladestation vermieden und eine schnelle Wiederinbetriebnahme erreicht werden.

Zur Lösung der Aufgabe weist die Erfindung die Merkmale des Patentanspruchs 1 auf.

Der besondere Vorteil der Erfindung besteht darin, dass durch das Vorsehen eine in die Ladestation integrierten elektrischen Energiespeichers hinreichend Energie für ein Durchführen notwendiger Notfallroutinen zur Verfügung gestellt wird. Die Ladestation kann somit bei einer Unterbrechung der externen Energieversorgung definiert außer Betrieb genommen werden. Die Dimensionierung des Speichers wird so durchgeführt, dass ausreichend Energie für die Ausführung der Notfallroutinen vorhanden ist. Dies kann im Einzelfall die Betätigung elektrischer Antriebe und den Betrieb einer Kommunikationseinheit (Sende- und Empfangseinheit) umfassen, wenn deren Funktion im Notfall wenigstens eingeschränkt zur Verfügung stehen soll.

Es ist hierbei nicht erforderlich, in einer Unterbrechungssituation alle üblichen Programm-Routinen oder alle wünschenswerten Programm-Routinen vollständig zu Ende durchzuführen. Vielmehr ist nach der Erfindung vorgesehen, sicherheitskritische Programm-Routinen und solche Programm-Routinen, die für den Kunden oder den Betreiber der Ladestation von besonderer Bedeutung sind, unter Nutzung der gespeicherten elektrischen Energie auszuführen. Beispielsweise kann die gespeicherte Energie genutzt werden, um Informationen über den aktuellen Ladevorgang, insbesondere über die in einen Energiespeicher des verbundenen Fahrzeugs eingespeiste Energiemenge und die hiermit verbunden Kosten in einem Datenspeicher der Steuereinheit abzulegen. Beispielsweise kann vorgesehen sein, dem vom Ausfall betroffenen Kunden über eine Kunden-ID zu identifizieren und unmittelbar von Seiten der Ladestation oder über einen Betreiber der Ladestation eine Nachricht zukommen zu lassen. Der Kunde kann dann zeitnah Maßnahmen ergreifen, um die Auswirkung des Ausfalls auf ihn zu reduzieren.

Indem der Energiespeicher als ein elektrischer Energiespeicher ausgebildet ist, können eine Vielzahl von Routinen in der gewohnten Weise durchgeführt werden. Beispielsweise kann bei elektrischen Stellantrieben auf eine mechanische Redundanzlösung verzichtet werden, wenn der Antrieb selbst mit der in dem Energiespeicher gespeicherten elektrischen Energie betätigt werden kann. Hierdurch reduzieren sich der konstruktive Aufwand sowie die Kosten. Überdies verringert sich der Wartungsaufwand, da auf eine regelmäßige Kontrolle und Funktionsprüfung der für den Notfall vorgehaltenen redundanten mechanischen Komponenten verzichtet werden kann. Einem unerkannten Ausfall dieser über einen langen Zeitraum nicht genutzten Komponenten ist insofern ebenfalls vorgebeugt.

Nach einer bevorzugten Ausführungsform der Erfindung ist der Steuerlastleitung ein Wandler zugeordnet, wobei der Wandler mit dem elektrischen Energiespeicher verbunden ist bzw. der Wandler die Steuerlastleitung in einen der Steuereinheit abgewandten ersten Steuerlastleitungsteil und einen den Wandler mit der Steuereinheit verbindenden zweiten Steuerlastleitungsteil unterteilt. Vorteilhaft wird hierdurch die Möglichkeit geschaffen, die Steuereinheit bei einer gegenüber dem Spannungsniveau der Versorgungsleitung bzw. der Ladelastleitung reduzierten Spannung zu betreiben. Während die Ladelastleitung üblicherweise bei 230 V bzw. 400 V betrieben wird, sind zum Betrieb der Steuereinheit z. B. 5 V, 12 V oder 24 V ausreichend.

Der Wandler, der beispielsweise als ein Transformator bzw. ein Schaltnetzteil ausgebildet sein kann, kann ebenfalls elektrische Energie in seinen Spulen bzw. Kondensatoren speichern. Insofern kann nach der Erfindung vorgesehen sein, einen elektrischen Energiespeicher und einen Wandler vorzusehen, wobei die zur Durchführung der Notfallroutinen erforderliche elektrische Energie in dem elektrischen Energiespeicher vorgehalten wird. Ebenso kann vorgesehen sein, dass die zur Durchführung der Notfallroutinen erforderliche Energie von dem Energiespeicher und dem Wandler gemeinsam bereitgestellt werden. In diesem Fall kann der elektrische Energiespeicher kleiner dimensioniert werden. Schließlich kann nach der Erfindung auch vorgesehen sein, dass der Wandler und der elektrische Energiespeicher eine einzige Funktions- bzw. Baugruppe bilden. Die Funktionen Wandeln und Speichern sind insofern räumlich integriert realisierbar.

Nach einer Weiterbildung der Erfindung ist die Steuereinheit über eine Abfragesignalleitung mit dem ersten Steuerlastleitungsteil bzw. der externen elektrischen Versorgungsleitung derart verbunden, dass über die Abfragesignalleitung eine Unterbrechung der externen Energieversorgung bzw. des ersten Steuerlastleitungsteils an die Steuereinheit gemeldet wird, so lange die Steuereinheit über den der Steuerlastleitung zugeordneten elektrischen Energiespeicher mit Energie versorgt ist. Vorteilhaft wird hierdurch eine zumindest zeitlich begrenzte Funktionsfähigkeit der Steuereinheit bei einer Unterbrechung der externen Energieversorgung sichergestellt. Die Abfragesignalleitung kann hierbei mittelbar oder unmittelbar mit der Ladelastleitung bzw. der externen elektrischen Versorgungsleitung verbunden sein. Beispielsweise kann die Abfragesignalleitung unmittelbar, insbesondere elektrisch leitend, mit der Ladelastleitung zusammenwirken. Da die Ladelastleitung mit der externen elektrischen Versorgungsleitung zusammenwirkt, ist hierdurch zugleich eine mittelbare Verbindung der Abfragesignalleitung mit der externen elektrischen Versorgungsleitung realisiert.

Nach einer Weiterbildung der Erfindung ist wenigstens ein elektrischer Verbraucher mit der Steuerlastleitung derart elektrisch verbunden, dass bei einer Unterbrechung der externen Energieversorgung der elektrische Verbraucher deaktiviert wird. Vorteilhaft wird durch das Deaktivieren des wenigstens einen elektrischen Verbrauchers der Energiebedarf der an der Steuerlastleitung angeschlossenen Abnehmer reduziert. Die so eingesparte elektrische Energie steht somit zum Betrieb der Steuereinheit und zur Ausführung der Notfallroutinen zur Verfügung. Bei den deaktivierten elektrischen Verbrauchern handelt es sich primär um solche Verbraucher, die als Komfortverbraucher keine sicherheitskritische Bedeutung haben. Beispielsweise kann ein Display der Ladestation abgeschaltet werden.

Nach einer Weiterbildung der Erfindung ist in einer den elektrischen Verbraucher mit der Steuerlastleitung verbindenden Zuleitung ein Schaltelement vorgesehen, wobei das Schaltelement über einen mit dem ersten Steuerlastleitungsteil verbundenen ersten Leitungsabschnitt der Abfragesignalleitung derart ansteuerbar ist, dass bei einer Unterbrechung der externen Energieversorgung bzw. des ersten Steuerlastleitungsteil die Verbindung des elektrischen Verbrauchers mit der Steuerlastleitung unterbrochen wird und/oder die Unterbrechung der externen Energieversorgung bzw. des ersten Steuerlastleitungsteils über einen das Schaltelement und die Steuereinheit verbindenden zweiten Leistungsabschnitt an die Steuereinheit gemeldet wird. Vorteilhaft können die Verbraucher durch das Vorsehen des ansteuerbaren Schaltelements quasi selbsttätig von der Steuerlastleitung getrennt werden. Ein aktives, beispielsweise von der Steuereinheit initiiertes Trennen des elektrischen Verbrauchers ist dann nicht erforderlich. Die Trennung kann somit besonders zeitnah, zuverlässig und ressourceneffektiv durchgeführt werden. Der Trennung unmittelbar zugeordnet ist darüber hinaus die Weitergabe des Signals an die Steuereinheit. Als Schaltelement kann hier beispielsweise ein Relais oder ein elektronisches Schaltelement vorgesehen sein. Das Schaltelement kann - insbesondere, wenn es als elektronisches Schaltelement realisiert ist - in der Steuereinheit integriert vorgesehen sein.

Nach der Erfindung sind die Steuereinheit derart ausgebildet und der elektrische Energiespeicher derart bemessen, dass ein dem Steckelement zugeordnetes Verriegelungselement zum Festlegen des Gegensteckelements in dem Steckelement mittels der in dem elektrischen Energiespeicher gespeicherten Energie von einer Verriegelungsposition, in der das Gegensteckelement an dem Steckelement festgelegt ist, in eine Öffnungsposition verbringbar ist, in der das Gegensteckelement und das Steckelement getrennt werden können. Insofern ist das Freigeben bzw. Entriegeln des an dem Steckelement festgelegten Gegensteckelements eine Notfallroutine im Sinne der Erfindung. Vorteilhaft wird durch das Freigeben des Gegensteckelements sichergestellt, dass auch bei einem Ausfall der Ladestation der Kunde das Ladekabel mit dem hieran angeschlossenen Gegensteckelement entnehmen kann. Es ist also für den Fall eines Ausfalls der Ladestation sichergestellt, dass der Kunde seine Fahrt fortsetzen kann und das Ladekabel bzw. Fahrzeug des Kunden nicht unlösbar mit der defekten Ladestation verbunden ist.

Das Ladekabel kann hierbei - je nach Ausführungsform und Bauart der Ladestation - als ein externes Ladekabel ausgeführt sein, welches von dem Kunden in dem an die Ladestation anzuschließenden Fahrzeug mitgeführt wird. In diesem Fall weist das Ladekabel das Gegensteckelement auf, welches an das Steckelement der Ladestation angesetzt wird. Ebenso kann das Ladekabel als Teil der Ladestation realisiert sein und aus dem Gehäuse der Ladestation herausgeführt sein. In diesem Fall weist das Ladekabel an einem dem Gehäuse abgewandten freien Ende desselben das Steckelement der Ladestation auf und wird an ein Gegensteckelement des Fahrzeugs angesetzt.

Eine Verriegelung des Gegensteckelements in dem Steckelement ist üblicherweise vorgesehen, um eine Trennung des Fahrzeugs von der Ladestation unter Last zu verhindern. Zugleich wird durch das Verriegeln Missbrauch und Vandalismus, etwa dem mutwilligen Unterbrechen des Ladevorgangs durch Entfernen des Gegensteckelements vom Steckelement durch unberechtigte Dritte, sowie einem Diebstahl des Ladekabels vorgebeugt.

Selbstverständlich kann die Ladestation mehr als ein Steckelement aufweisen und dazu dienen, zeitgleich mehr als einen Fahrzeugspeicher zu laden. In diesem Fall ist üblicherweise eine Verriegelungseinheit je Steckelement vorgesehen. Der elektrische Energiespeicher ist dabei so bemessen, dass hinreichend Energie zur Verfügung steht, um bei einer Unterbrechung der externen Energieversorgung jedes Verriegelungselement in die Öffnungsposition zu verbringen.

Nach einer Weiterbildung der Erfindung sind die Steuereinheit derart ausgebildet und der mit der Steuereinheit zusammenwirkenden elektrische Energiespeicher derart bemessen, dass mittels einer mit der Steuereinheit zusammenwirkenden Sendeeinheit ein Signal zur Kenntlichmachung der Unterbrechung der externen Energieversorgung an einen externen Empfänger gesendet werden kann. Insofern ist auch das Senden eines Notsignals etwa an den Betreiber der Ladestation oder an ein Serviceunternehmen eine Notfallroutine im Sinne der Erfindung. Vorteilhaft kann durch das Senden des Signals eine zeitnahe Reparatur bzw. Wiederinbetriebnahme der Ladestation erreicht werden.

Das Signal kann beispielsweise kabellos als ein Funksignal oder über eine Kommunikations- und Datenleitung der Ladestation übertragen werden.

Um die Auswirkungen der Unterbrechung der externen Energieversorgung für den Kunden möglichst gering zu halten, kann eine Information über den Verriegelungszustand des Gegensteckelements an den Betreiber der Ladestation bzw. eine von dem Betreiber vorgehaltene, der Ladestation zugeordnete Zentralstation gesendet werden. Beispielsweise kann eine Wiederinbetriebnahme der Ladestation besondere Priorität erhalten, wenn das Gegensteckelement unverändert an dem Steckelement festgelegt ist und der Kunde demzufolge daran gehindert ist, sein Fahrzeug von der Ladestation zu trennen.

Nach einer Weiterbildung der Erfindung ist der elektrische Energiespeicher zwischen dem Wandler und der Steuereinheit vorgesehen bzw. erfasst die Abfragesignalleitung die Spannung der Steuerlastleitung auf einer der Steuereinheit abgewandten Seite des Wandlers. Vorteilhaft wird hierdurch verhindert, dass die in dem Energiespeicher bevorratete Energie bei einer Unterbrechung der externen Energieversorgung zurückgespeist bzw. zum Laden des Fahrzeugs verwandt wird.

Nach einer Weiterbildung der Erfindung ist der elektrische Energiespeicher als Kondensator ausgebildet. Vorteilhaft kann hierdurch ein wartungsfreier oder zumindest sehr wartungsarmer Speicher realisiert werden.

Bei der Verwendung eines nicht wartungsfreien Speichers, beispielsweise einer wieder aufladbaren Batterie (Akku), kann die Steuereinheit zugleich zu Überwachung und/oder Überprüfung der Funktionsfähigkeit des Speichers dienen.

Zur Lösung der Aufgabe sieht die Erfindung ein Verfahren mit den Merkmalen des Patentanspruchs 9 vor.

Der besondere Vorteil der Erfindung besteht darin, dass mittels der in dem elektrischen Energiespeicher bereitgehaltenen Energie zwei sicherheitskritische bzw. besonders relevante Komfortfunktionen als Notfallroutinen auch bei einer plötzlichen, unvorhergesehenen Unterbrechung der externen elektrischen Energieversorgung durchgeführt werden können.

Als Notfallroutine wird ein Verriegelungselement zum Festlegen eines in ein Steckelement der Ladestation einsetzbaren Gegensteckelement in eine Öffnungsposition verbracht, in der das Gegensteckelement von dem Steckelement entnehmbar ist, und/oder ein Signal zur Kenntlichmachung der Notfallsituation an einen externen Empfänger versendet. Vorteilhaft wird durch das Entriegeln des Gegensteckelements ein Kunde in die Lage versetzt, nach einem Ausfall der elektrischen Energieversorgung sein Fahrzeug von der Ladestation zu trennen. Zwar ist der Energiespeicher des Fahrzeugs infolge des ungeplanten Ausfalls der Ladestation mitunter nicht vollständig geladen. Jedoch ist sichergestellt, dass der Kunde auf jeden Fall sein Fahrzeug bzw. sein Ladekabel von der Ladestation trennen und wahlweise seine Fahrt fortsetzen bzw. den Energiespeicher an einer anderen Ladestation weiter laden kann. Durch das Versenden eines den Ausfall der Ladestation kenntlich machenden Signals an einen externen Empfänger, beispielsweise an einen Betreiber der Ladestation bzw. an ein Serviceunternehmen, kann die Ladestation zeitnah gewartet und wieder in Betrieb genommen werden. Insbesondere ist es nicht erforderlich, dass der Betreiber bzw. Servicepartner von einem Dritten, insbesondere einem Kunden, auf den Ausfall der Ladestation aufmerksam gemacht wird.

Nach einer bevorzugten Ausführungsform der Erfindung wird bei der Unterbrechung der externen elektrischen Energieversorgung wenigstens ein elektrischer Verbraucher deaktiviert. Indem als Teil der Notfallroutinen wenigstens ein elektrischer Verbraucher deaktiviert wird, kann im Sinne einer Prioritätsbildung die gespeicherte elektrische Energie gezielt der Durchführung der Notfallroutinen dienen.

Nach einer Weiterbildung der Erfindung werden zuerst die elektrischen Verbraucher deaktiviert und danach weitere Notfallroutinen ausgeführt. Vorteilhaft erfolgt der Betrieb der Ladestation nach einer Unterbrechung der externen elektrischen Energieversorgung besonders ressourceneffektiv, wenn die elektrischen Verbraucher zeitnah abgeschaltet werden. Indem die Notfallroutinen erst dem Deaktivieren der elektrischen Verbraucher ausgeführt werden, müssen die elektrischen Verbraucher nicht mehr während der Ausführung der Notfallroutinen mit elektrischer Energie versorgt werden.

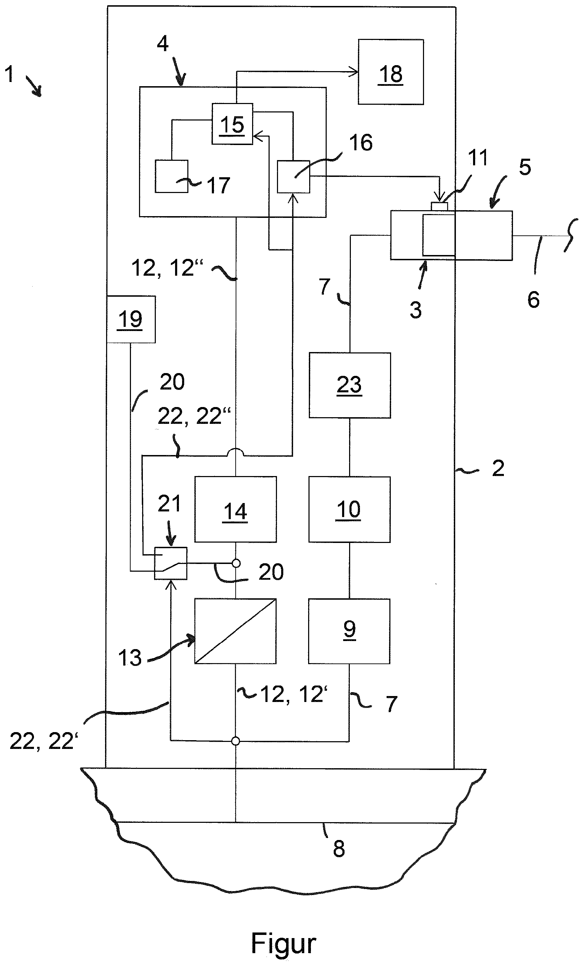

Ein Ausführungsbeispiel der Erfindung wird nachfolgend anhand der Figur deutlich gemacht.

Die Figur zeigt eine Prinzipdarstellung einer erfindungsgemäßen Ladestation 1, die beispielhaft säulenartig ausgebildet ist. Die Ladestation 1 weist in einem Gehäuse 2 ein Steckelement 3 und eine Steuereinheit 4 auf. Das Steckelement 3, welches zur Aufnahme eines Gegensteckelements 5 eines die Ladestation 1 mit einem Fahrzeug verbindenden Ladekabel 6 ausgebildet ist, ist über eine Ladelastleitung 7 mit einer externen elektrischen Versorgungsleitung 8 verbunden. Die externe elektrische Versorgungsleitung 8 ist exemplarisch als eine Erdleitung ausgebildet. Der Ladelastleitung 7 sind in an sich bekannter Weise eine Schutzschalteinheit 9, welche insbesondere als ein FI Schutzschalter ausgebildet sein kann, eine Sicherungseinheit 10 sowie eine Lastschalteinheit 23, insbesondere ein Schütz 23 zum Schalten des Steckelements 3 zugeordnet.

Als Fahrzeuge im Sinne der Erfindung gelten alle Automobile (PKW, LKW, Wohnmobile, Zweiräder usw.), Schienenfahrzeuge (insbesondere Lokomotiven), Wasserfahrzeuge (Schiffe), Luftfahrzeuge sowie Anhänger (Wohnanhänger, mobile Verkaufsstände usw.).

Selbstverständlich kann die Ladestation 1 eine andere als die dargestellte Geometrie aufweisen. Beispielsweise kann die Ladestation 1 als eine wandhängende Ladestation 1 ausgebildet sein. Die Versorgungsleitung 8 kann dann als wandgeführte Versorgungsleitung 8 in oder auf der Wand vorgesehen sein. Beispielsweise kann die Ladestation 1 als eine verteilte Ladestation 1, insbesondere als eine Master-Slave-Ladestation 1 ausgebildet sein mit getrennten Teilgehäusen für Master und Slave.

Dem Steckelement 3 ist eine Verriegelungseinheit 11 mit einem nicht dargestellten Verriegelungselement zugeordnet. Das Verriegelungselement kann beispielsweise mittels eines elektrischen Aktuators von einer Öffnungsposition, in der das Gegensteckelement 5 von dem Steckelement 3 entnehmbar ist, in eine Verriegelungsposition, in der das Gegensteckelement 5 an dem Steckelement 3 festgelegt ist. Die Verriegelungseinheit 11 dient insofern dazu, ein Entfernen des Gegensteckelements 5 aus dem Steckelement 3 während des Ladevorgangs zu verhindern. Es dient gleichzeitig dem Schutz vor Vandalismus, Missbrauch und Diebstahl, da das Ladekabel 6 nicht entfernt werden kann, so lange das Gegensteckelement 5 an dem Steckelement 3 der Ladestation 1 festgelegt ist.

Die Steuereinheit 4 wird über eine Steuerlastleitung 12 mit elektrischer Energie versorgt. Die Steuerlastleitung 12 ist wie die Ladelastleitung 7 mit der externen elektrischen Versorgungsleitung 8 verbunden. Zum Herabsetzen der Spannung von einem Niveau der Ladelastleitung 7 auf ein Niveau der Steuerlastleitung 12 ist zwischen der Ladelastleitung 7 und der Steuerlastleitung 12 ein Wandler 13 vorgesehen. Der Wandler 13 ist beispielsweise als ein Transformator ausgebildet. Der Wandler 13 kann beispielsweise als ein Schaltnetzteil ausgebildet sein. Der Wandler 13 teilt die Steuerlastleitung 12 in einen ersten Steuerlastleitungsteil 12' und einen zweiten Steuerlastleitungsteil 12", wobei der zweite Steuerlastleitungsteil 12" zwischen dem Wandler 13 und der Steuereinheit 4 und der erste Steuerlastleitungsteil 12' auf eine der Steuereinheit 4 abgewandten Seite des Wandlers 13 vorgesehen sind.

Der Steuerlastleitung 12 ist ein elektrischer Energiespeicher 14 zugeordnet. Der elektrische Energiespeicher 14 ist in den zweiten Steuerlastleitungsteil 12" integriert und so verbaut, dass er die Steuereinheit 4 über die Steuerlastleitung 12, 12' mit elektrischer Energie versorgen kann.

Die Steuereinheit 4 weist exemplarisch ein übergeordnetes Hauptsteuermodul 15 und zwei mit dem Hauptsteuermodul 15 zusammen wirkende Teilsteuermodule 16, 17 auf. Ein erstes Teilsteuermodul 16 wirkt beispielsweise mit dem dargestellten Steckelement 3 zusammen. Ein zweites Teilsteuermodul 17 kann beispielsweise zum Betrieb eines nicht dargestellten, weiteren Steckelements vorgesehen sein. Das Hauptsteuermodul 15 dient exemplarisch der Koordination, Überwachung und Durchführung übergeordneten Routinen der Ladestation 1. Beispielsweise dient das Hauptsteuermodul 15 zur Ansteuerung einer Sendeeinheit 18, über die die Ladestation 1 mit einem Betreiber der Ladestation und/oder Dritten (z. B. einem mit der Wartung beauftragten Serviceunternehmen) Daten austauscht.

Die Steuerlastleitung 12 dient neben der Versorgung der Steuereinheit 4 mit elektrischer Energie auch der Energieversorgung weiterer elektrischer Verbraucher. Exemplarisch ist als ein weiterer elektrischer Verbraucher eine Leuchteinheit 19 (LED-Leuchteinheit) dargestellt. Die Leuchteinheit 19 ist über eine Zuleitung 20 mit dem zweiten Teil 12" der Steuerlastleitung 12 verbunden. Der Zuleitung 20 ist ein Schaltelement 21 zugeordnet, über das die Leuchteinheit 19 je nach Schaltposition des Schaltelements 21 mit der Steuerlastleitung 12 verbunden oder von derselben getrennt ist. Das Schaltelement 21 ist beispielsweise als Relais ausgebildet.

In einem Normalbetriebszustand der Ladestation wird der elektrische Energiespeicher 14 mit elektrischer Energie geladen. Bei einem Ausfall der externen Energieversorgung der Ladestation 1, d. h. insbesondere bei einer Unterbrechung der erdverlegten Versorgungsleitung 8 bzw. des ersten Steuerlastleitungsteils 12', kann die Steuereinheit 4 für einen begrenzten Zeitraum aus dem elektrischen Energiespeicher 14 mit Energie versorgt werden. Eine Kapazität (Speichervolumen) des elektrischen Energiespeichers 14 ist hierbei so bemessen, dass definierte Notfallroutinen mit der in dem Energiespeicher 14 gespeicherten elektrischen Energie ausgeführt werden können. Indem der Energiespeicher 14 dem zweiten Steuerlastleitungsteil 12" zugeordnet und zwischen dem Wandler 13 und der Steuereinheit 4 angeordnet ist, wird verhindert, dass die in dem Energiespeicher 14 bereitgestellte Energie im Falle einer Unterbrechung der externen Versorgungsleitung 8 über die Ladelastleitung 7 in das Fahrzeug eingespeist wird.

Um der Steuereinheit 4 die Notwendigkeit zur Durchführung der Notfallroutinen anzuzeigen, ist eine die Spannung des ersten Steuerlastleitungsteils 12' überwachende Abfragesignalleitung 22 vorgesehen. Die Abfragesignalleitung 22 dient dazu, eine Unterbrechung der externen Energieversorgung im Bereich der externen elektrischen Versorgungsleitung 8 oder des ersten Teils der Steuerlastleitung 12' ohne nennenswerte zeitliche Verzögerung an die Steuereinheit 4 zu melden. Die Steuereinheit 4 kann dann in einem Notfallbetriebsmodus weiter betrieben werden und mit Hilfe der in den elektrischen Energiespeicher 14 vorgehaltenen elektrischen Energie definierte Notfallroutinen ausführen. Beispielsweise kann die in dem elektrischen Energiespeicher 14 gespeichert Energie dazu dienen, das Verriegelungselement der Verriegelungseinheit 11 in die Öffnungsposition zu verbringen. Hierdurch ist sichergestellt, dass ein Kunde bei einer Unterbrechung der externen Energieversorgung das Gegensteckelement 5 von dem Steckelement 3 entfernen und sein Fahrzeug von der Ladestation 1 trennen kann. Beispielsweise kann mittels der in dem elektrischen Energiespeicher 14 gespeicherten elektrischen Energie von der Steuereinheit 4 über die Sendeeinheit 18 ein Signal zur Kenntlichmachung der Unterbrechung der externen Energieversorgung an einen externen Empfänger, insbesondere an den Betreiber der Ladestation 1 oder an ein Serviceunternehmen, abgesendet werden. Hierdurch ist sichergestellt, dass die notwendigen Stellen zeitnah über den Ausfall der Ladestation 1 informiert sind und innerhalb kurzer Zeit Wartungsarbeiten veranlasst werden können.

Die Abfragesignalleitung 22 dient zunächst als Eingangssignal (Signaleingang) für das Schaltelement 21, welches dem elektrischen Verbraucher 19 (Leuchteinheit) zugeordnet ist. Hierzu verbindet ein erster Leitungsabschnitt 22' der Abfragesignalleitung 22 den ersten Steuerlastleitungsteil 12' mit einem Signaleingang des Schaltelements 21. Sobald über die Abfragesignalleitung 22 eine Unterbrechung der externer Energieversorgung angezeigt wird, trennt das Schaltelement 21 den elektrischen Verbraucher 19 von der Steuerlastleitung 12 mit der Folge, dass die Leuchte 19 deaktiviert wird und die für den Notfall in dem elektrischen Energiespeicher 14 vorgehaltene Energie möglichst vollständig zur Durchführung der Notfallroutinen genutzt werden kann. Durch den Schaltvorgang des Schaltelements 21 wird über einen zweiten Leitungsabschnitt 22" der Abfragesignalleitung 22 die Unterbrechung (d. h. der Spannungsabfall in dem ersten Steuerlastleitungsteil 12') an die Steuereinheit gemeldet. Die Steuereinheit 4 kann dann weitere Notfallroutinen ausführen.

Vorliegend ist die in die Steuereinheit 4 geführte Abfragesignalleitung 22 als (zwei-) geteilte Abfragesignalleitung 22 ausgebildet, wobei der erste Leitungsabschnitt 22' durch das Schaltelement 21 von dem zweiten Leitungsabschnitt 22" getrennt ist und das Spannungssignal dem Schaltelement 21 unmittelbar und der Steuereinheit 4 mittelbar (über das Schaltelement 21) zugeführt wird. Nach einer alternativen Ausführungsform der Erfindung kann beispielsweise auf das Schaltelement 21 und das trennen elektrischer Verbraucher 19 verzichtet werden und die Abfragesignalleitung 22 direkt in die Steuereinheit 4 geführt werden. Ebenfalls kann das Trennen elektrischer Verbraucher 19 und die Signalbeaufschlagung der Steuereinheit 4 über vollständig getrennte Abfragesignalleitungen 22 jeweils unmittelbar realisiert werden.

Im Sinne eines Prioritätsmanagements ist hierbei vorgesehen, dass zunächst der elektrische Verbraucher 19 von der Energieversorgung getrennt wird und anschließend die weiteren Notfallroutinen durchgeführt werden. Beispielsweise kann mittels der in dem Energiespeicher 14 bereitgestellten elektrischen Energie zunächst das Verriegelungselement in die Öffnungsposition verbracht werden. Hierdurch ist sichergestellt, dass die Auswirkungen der Unterbrechung für den Kunden möglichst gering sind. Anschließend kann mit der dann noch zur Verfügung stehenden Energie das Signal zur Kenntlichmachung der Unterbrechung an den externen Empfänger gesendet werden. Sofern das Verriegelungselement nicht beim ersten Versuch in die Öffnungsposition gelangt, kann der Öffnungsvorgang einmal oder mehrfach wiederholt werden. Eventuell kann die in dem elektrischen Energiespeicher 14 bevorratete Energie vollständig für das Öffnen des Verriegelungselements verwendet und auf das Senden des Signals zur Kenntlichmachung zur Unterbrechung verzichtet werden. Ebenfalls ist es möglich, mit dem Signal zur Kenntlichmachung der Unterbrechung der externen Energieversorgung zusätzlich eine weitere Information an den externen Empfänger zu senden, wenn das Verriegelungselement nicht in die Öffnungsposition verbracht werden konnte und der Kunde demzufolge nicht in der Lage ist, sein Fahrzeug von der Ladestation 1 zu trennen.

Abweichend von der dargestellten Ausführungsform der Erfindung kann die Unterbrechung der Energieversorgung über die Abfragesignalleitung 22 an alle Steuermodule (Hauptsteuermodul 15, Teilsteuermodule 16, 17) gemeldet werden.

Es kann vorgesehen sein, dass die Steuermodule 15, 16, 17 das Signal der Abfragesignalleitung 22 mit besonders hoher oder höchster Priorität verarbeiten. Beispielsweise kann die Abfragesignalleitung 22 zu diesem Zweck mit einem Interrupt-Eingang der Teilsteuermodule 16, 17 verbunden sein.

## Patentansprüche

1. Ladestation (1) zum Bereitstellen elektrischer Energie für elektrisch betreibbare Fahrzeuge mit einem Gehäuse (2), mit einem dem Gehäuse (2) zugeordneten Steckelement (3), an welches ein Gegensteckelement (5) ansetzbar ist zur elektrisch leitenden Verbindung von Fahrzeug und Ladestation, mit einer Steuereinheit (4) zur Koordination und Durchführung eines Ladevorgangs und mit einer Ladelastleitung (7), welche das Steckelement (3) mit einer die externe Energieversorgung bereitstellenden, externen elektrischen Versorgungsleitung (8) verbindet, wobei die Steuereinheit (4) mittels einer ebenfalls mit der externen elektrischen Versorgungsleitung (8) verbundenen Steuerlastleitung (12) mit elektrischer Energie versorgt ist, wobei der Steuerlastleistung (12) ein elektrischer Energiespeicher (14) zugeordnet ist, der derart dimensioniert ist und der derart mit der Steuereinheit (4) zusammenwirkt, dass von der Steuereinheit (4) bei einer Unterbrechung der externen Energieversorgung vorgegebene Notfallroutinen unter Nutzung der in dem Energiespeicher (14) bereitgestellten elektrischen Energie durchführbar sind, und wobei die Steuereinheit (4) derart ausgebildet ist und wobei der elektrische Energiespeicher (14) derart bemessen ist, dass mittels einer mit der Steuereinheit (4) zusammenwirkende Sendeeinheit (18) ein Signal zur Kenntlichmachung der Unterbrechung der externen Energieversorgung an einen externen Empfänger versendet werden kann.

2. Ladestation (1) nach Anspruch 1, **dadurch gekennzeichnet, dass** zur Beaufschlagung der Steuereinheit (4) mit einer gegenüber der Spannung der externen Versorgungsleitung (8) und/oder der Ladelastleitung (7) reduzierten Spannung der Steuerlastleitung (12) ein Wandler (13) zugeordnet ist, wobei der Wandler (13) mit dem elektrischen Energiespeicher (14) verbunden ist und/oder wobei der Wandler (13) die Steuerlastleistung (12) in einen der Steuereinheit (4) abgewandten ersten Steuerlastleistungsteil (12') und einen der Steuereinheit (4) zugewandten zweiten Steuerlastleitungsteil (12") unterteilt.

3. Ladestation (1) nach Anspruch 1 oder 2, **dadurch gekennzeichnet, dass** die Steuereinheit (4) über eine Abfragesignalleitung (22) mit dem ersten Steuerlastleitungsteil (12') und/oder der externen elektrischen Versorgungsleitung (8) verbunden ist derart, dass über die Abfragesignalleitung (22) eine Unterbrechung der externen Energieversorgung und/oder des ersten Steuerlastleitungsteil (12') an die Steuereinheit (4) gemeldet wird, so lange die Steuereinheit (4) über den der Steuerlastleitung (12) zugeordneten Energiespeicher (14) mit Energie versorgt ist.

4. Ladestation (1) nach einem der Ansprüche 1 bis 3, **dadurch gekennzeichnet, dass** wenigstens ein elektrischer Verbraucher (19) mit der Steuerlastleitung (12) derart elektrisch verbunden ist, dass bei einer Unterbrechung der externen Energieversorgung der elektrische Verbraucher (19) deaktiviert wird.

5. Ladestation (1) nach einem der Ansprüche 1 bis 4, **dadurch gekennzeichnet, dass** in einer den elektrischen Verbraucher (19) mit der Steuerlastleitung (12) verbindenden Zuleitung (20) ein Schaltelement (21) vorgesehen ist, wobei das Schaltelement (21) über einen mit dem ersten Steuerlastleitungsteil (12') verbundenen ersten Leitungsabschnitt (22') der Abfragesignalleitung (22) derart ansteuerbar ist, dass bei einer Unterbrechung der externen Energieversorgung und/oder des ersten Steuerlastleitungsteil (12') die Verbindung des elektrischen Verbrauchers (19) mit der Steuerlastleitung (12) unterbrochen wird und/oder die Unterbrechung der externen Energieversorgung und/oder des ersten Steuerlastleitungsteils (12') über einen das Schaltelement (21) und die Steuereinheit (4) verbindenden zweiten Leitungsabschnitt (22") der Abfragesignalleitung (22) an die Steuereinheit (4) gemeldet wird.

6. Ladestation (1) nach einem der Ansprüche 1 bis 5, **dadurch gekennzeichnet, dass** dem Steckelement (3) eine Verriegelungseinheit (11) mit einem Verriegelungselement zum Festlegen des Gegensteckelements (5) an dem Steckelement (3) zugeordnet ist, dass die Steuereinheit (4) und die Verriegelungseinheit (11) derart ausgebildet sind und dass der mit der Steuereinheit (4) zusammenwirkende elektrische Energiespeicher (14) derart bemessen ist, dass das Verriegelungselement mittels der in dem elektrischen Energiespeicher (14) gespeicherten Energie von einer Verriegelungsposition, in der das Gegensteckelement (5) an dem Steckelement (3) festgelegt ist, in eine Öffnungsposition verbringbar ist, in der das Gegensteckelement (5) von dem Steckelement (3) entnehmbar ist.

7. Ladestation (1) nach einem der Ansprüche 1 bis 6, **dadurch gekennzeichnet, dass** der elektrische Energiespeicher (14) zwischen dem Wandler (13) und der Steuereinheit (4) vorgesehen ist und/oder dass die Abfragesignalleitung (22) die Spannung der Steuerlastleitung (12) auf eine der Steuereinheit (4) abgewandten Seite des Wandlers (13) erfasst.

8. Ladestation (1) nach einem der Ansprüche 1 bis 7, **dadurch gekennzeichnet, dass** der elektrische Energiespeicher (14) als Kondensator (14) ausgebildet ist.

9. Verfahren zum Betrieb einer Ladestation zur Bereitstellung elektrischer Energie für elektrisch betreibbare Fahrzeuge, insbesondere einer Ladestation nach einem der Ansprüche 1 bis 8, umfassend die folgenden Verfahrensschritte:
- Aufladen eines elektrischen Energiespeichers (14) in einem Normalbetriebszustand der Ladestation (1) und
- Verbringen eines Verriegelungselements zum Festlegen eines in ein Steckelement (3) der Ladestation (1) eingesetzten Gegensteckelements (5) mittels der in dem elektrischen Energiespeicher (14) gespeicherten Energie in einer Öffnungsposition, in der das Gegensteckelement (5) von dem Steckelement (3) entnehmbar ist, bei einer Unterbrechung der externen Energieversorgung der Ladestation (1) und/oder des ersten Steuerlastleitungsteils (12') als eine erste Notfallroutine, und
- Versenden eines Signals zur Kenntlichmachung der Unterbrechung der externen Energieversorgung an einen externen Empfänger bei einer Unterbrechung der externen Energieversorgung der Ladestation (1) und/oder des ersten Steuerlastleitungsteils (12') als eine zweite Notfallroutine.

10. Verfahren nach Anspruch 9, **dadurch gekennzeichnet, dass** bei der Unterbrechung der externen Energieversorgung wenigstens ein elektrischer Verbraucher (19) deaktiviert wird.

11. Verfahren nach Anspruch 9 oder 10, **dadurch gekennzeichnet, dass** zuerst der elektrische Verbraucher (19) deaktiviert und danach die erste und die zweite Notfallroutine ausgeführt werden.
